# EUROPEAN PATENT APPLICATION

(11) **EP 4 513 666 A1**
(43) Date of publication of application: **26.02.2025**
(21) Application number: 24804401.8
(22) Date of filing: 07.06.2024
(51) Int. Cl.: H01M 50/645

(54) **BATTERY ELECTROLYTE INJECTION STRUCTURE, BATTERY, AND BATTERY PACK**

(30) Priority: 09.06.2023 CN 202321468477 U
(71) Applicant: Eve Power Co., Ltd., Jingmen, Hubei 448000 (CN)
(72) Inventor: AN, Suli, Jingmen, Hubei 448000 (CN); SHU, Kuanjin, Jingmen, Hubei 448000 (CN); ZHENG, Xu, Jingmen, Hubei 448000 (CN); HE, Xiaowu, Jingmen, Hubei 448000 (CN); HUANG, Jinhai, Jingmen, Hubei 448000 (CN); LIN, Zhibing, Jingmen, Hubei 448000 (CN)
(74) Representative: Berggren Oy
(86) International application number: PCT/CN2024/098079
(87) International publication number: WO 2024/251259

(57) **Abstract**

A battery liquid injection structure, a battery and a battery pack are provided in the present application. The battery liquid injection structure includes a top cover piece and a sealing member. The top cover piece is provided with a liquid injection portion, and a core of the battery is below the liquid injection portion. The liquid injection portion is provided with a liquid injection hole arranged obliquely. The sealing member is sealingly inserted in the liquid injection hole. The present application improves sealing performance of the battery, solves the risk of liquid leakage at the sealing position, and prevents the sealing nail from invertedly inserting into the core.

## Description

This application claims priority to and the benefit of Chinese Patent Application No. 202321468477.3, filed on June 9, 2023, the disclosure of which is incorporated herein by reference in its entirety.

### TECHNICAL FIELD

The present application relates to the technical field of battery packs, and more particularly, to a battery liquid injection structure, a battery, and a battery pack.

### BACKGROUND

A top of the square battery is provided with a liquid injection device, and a top cover of the square battery is provided with a liquid injection hole. The liquid injection hole is vertically arranged in an upper surface of the square battery, that is, the liquid injection hole is vertically arranged. When the liquid injection is not required, a sealing nail is installed in the liquid injection hole, so that the sealing of the liquid injection hole is realized.

### SUMMARY

Because a wall thickness of the top cover is relatively thin, a length of the liquid injection hole is relatively short, and a contact area between the sealing nail and an inner wall of the liquid injection hole is relatively small, that is, the effective sealing area is relatively small. So, the sealing effect is relatively poor, and thus there is a risk of liquid leakage.

Based on the above, the present application provides a battery liquid injection structure, a battery, and a battery pack, which improves the sealing performance of the battery, solve the risk of the liquid leakage at the sealing position of the battery, prevent the sealing nail from inserting invertedly into the core, and improve the yield of the product.

In a first aspect, the present application provides a battery injection structure includes:
a top cover piece provided with a liquid injection portion, in which the liquid injection portion is provided with a liquid injection hole arranged obliquely; and
a sealing member sealingly inserted in the liquid injection hole.

In a second aspect, the present application provides a battery including a body and a battery liquid injection structure located at a top end of the body, in which the battery liquid injection structure includes:
a top cover piece provided with a liquid injection portion, in which the liquid injection portion is provided with a liquid injection hole arranged obliquely; and
a sealing member sealingly inserted in the liquid injection hole.

In a third aspect, the present application the present application provides a battery pack including the battery described above.

### BENEFICIAL EFFECT

The present application provides a battery liquid injection structure, a battery, and a battery pack. Since a liquid injection hole of a liquid injection portion is obliquely disposed, a length of the liquid injection hole is increased. When the sealing member is sealingly inserted into the liquid injection hole, the contact area between the sealing member and the liquid injection hole is increased. This battery liquid injection structure increases the effective sealing area between the liquid injection portion and the sealing member with respect to the liquid injection portion vertically arranged in the related art, thereby improving the sealing performance and solving the risk of liquid leakage at the sealing position. Further, while ensuring the length of the sealing member, after the sealing member is inserted, the sealing member is farther away from the core, thereby preventing the sealing member from invertedly inserting into the core, and increasing the yield of the product. Finally, the liquid injection hole is obliquely arranged so as to provide a buffer for the liquid at the time of liquid injection, thereby improving the processing quality of the battery.

### BRIEF DESCRIPTION OF THE DRAWINGS

FIG. 1 is a bottom view of a battery liquid injection structure according to embodiments of the present application;
FIG. 2 is a cross-sectional view of a partial structure of a battery liquid injection structure according to embodiments of the present application;
FIG. 3 is a cross-sectional view of a partial structural of a top cover piece according to embodiments of the present application; and
FIG. 4 is a schematic structural diagram of a sealing nail according to embodiments of the present application.

In the figure:
1. top cover piece; 11. liquid injection portion; 111. liquid injection hole; 112, first sinking platform; 113. second sinking platform;
12. boss;
2. sealing member; 21. sealing portion; 22. connecting portion; and
3. fixing piece.

### DETAILED DESCRIPTION

In the related art, because the wall thickness of the top cover is relatively thin, the length of the liquid injection hole is relatively short, and the contact area between the sealing nail and the inner wall of the liquid injection hole is relatively small, that is, the effective sealing area is relatively small. So, the sealing effect is relatively poor, and there is a risk of liquid leakage. Secondly, because the sealing nail is longer, the sealing nail is easy to insertedly insert into the core below the liquid injection hole, thereby resulting in poor product. Further, the liquid injection hole is vertically provided, and the liquid injection hole is not favorable for buffering the liquid because the pressure applied by the liquid injection device is higher.

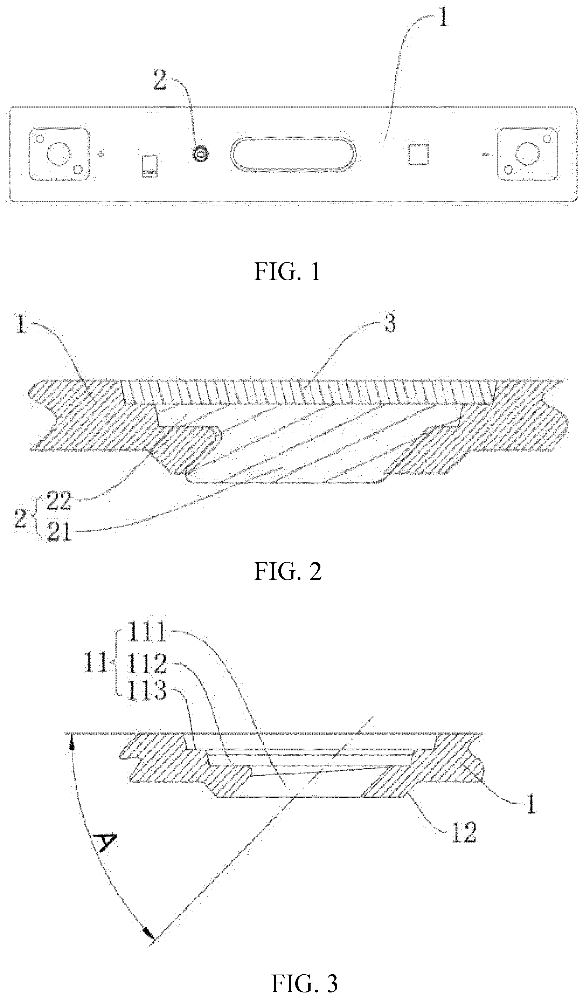

As shown in FIGS. 1 to 2, the present embodiments provide a battery pack including a battery. The battery includes a body and a battery liquid injection structure. The battery liquid injection structure is located at a top end of the body. The battery liquid injection structure includes a top cover piece 1 and a sealing member 2.

Specifically, the top cover piece 1 is provided with a liquid injection portion 11. The core of the battery is located below the liquid injection portion 11. The liquid injection portion 11 is provided with a liquid injection hole 111. The liquid injection hole 111 is obliquely arranged. The sealing member 2 is sealingly inserted into the liquid injection hole 111. Since the liquid injection hole 111 of the liquid injection section 11 is obliquely arranged, the length of the liquid injection hole 111 is increased. When the sealing member 2 is sealingly inserted into the liquid injection hole 111, the contact area between the sealing member 2 and the liquid injection hole 111 is increased. This battery liquid injection structure increases the effective sealing area between the liquid injection portion 11 and the sealing member 2 with respect to the liquid injection portion 11 vertically provided in the related art, thereby improving the sealing performance and solving the risk of liquid leakage at the sealing position. Further, while the length of the sealing member 2 is ensured, after the sealing member 2 is inserted, the sealing member 2 is further away from the core, thereby preventing the sealing member 2 from invertedly inserting into the core, and thus increasing the yield of the product. Finally, the liquid injection hole 111 is provided obliquely so as to provide a buffer for the liquid at the time of liquid injection, thereby improving the processing quality of the battery.

Preferably, an axis of the liquid injection hole 111 is disposed obliquely with respect to an upper surface of the top cover piece 1. Since the axis of the liquid injection hole 111 of the liquid injection portion 11 is disposed obliquely with respect to the upper surface of the top cover piece 1, the length of the liquid injection hole 111 is increased. When the sealing member 2 is sealingly inserted into the liquid injection hole 111, the contact area between the sealing member 2 and the liquid injection hole 111 is increased, and the sealing performance at the liquid injection hole 111 is improved.

Preferably, the sealing member 2 includes a sealing nail provided with a sealing portion 21. The sealing portion 21 is sealingly inserted into the liquid injection hole 111. When the sealing portion 21 of the sealing nail is sealingly inserted into the liquid injection hole 111, the contact area between the sealing portion 21 and the liquid injection hole 111 is increased. This battery liquid injection structure increases the effective sealing area between the liquid injection portion 11 and the sealing nail with respect to the liquid injection portion 11 vertically provided in the related art, thereby improving the sealing performance and solving the risk of liquid leakage at the sealing position. Further, when the length of the sealing nail is ensured, the sealing portion 21 is further away from the core after the sealing nail is inserted, thereby preventing the sealing nail from invertedly inserting into the core, and improving the yield of the product. Finally, the liquid injection hole 111 is provided obliquely so as to provide a buffer for the liquid at the time of liquid injection, thereby improving the processing quality of the battery.

Preferably, as shown in FIG. 3, an inclination angle of the axis of the liquid injection portion 11 with respect to the upper surface of the top cover piece 1 is denoted by A, and satisfies 75°≥A≥15°. Specifically, a value of the inclination angle Ais 15°, 25°, 35°, 45°, 55°, 65° and 75°. In this embodiment, the value of the inclination angle of the axis of the liquid injection portion 11 is 45°, with respect to the upper surface of the top cover piece 1. Further preferably, a shape of a cross-section of the liquid injection hole 111 is circular, elliptical or polygonal, and a shape of the sealing portion 21 matches the shape of the liquid injection hole 111. In this embodiment, the shape of the cross section of the liquid injection hole 111 is elliptical.

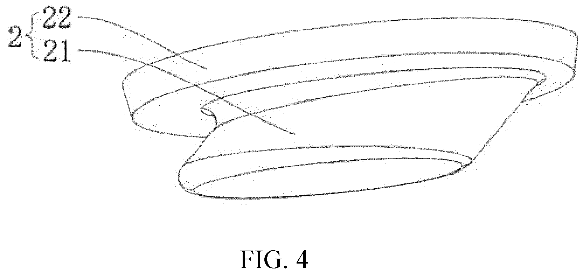

Preferably, as shown in FIGS. 2 to 4, a first sinking platform 112 is provided at an end of the liquid injection hole 111, and an inner diameter of the first sinking platform 112 is larger than an inner diameter of the liquid injection hole 111. The first sinking platform 112 surrounds the liquid injection hole 111. The sealing nail is provided with a connecting portion 22 embedded in the first sinking platform 112, so that the sealing nail is positioned and mounted on the liquid injection portion 11. Further, the first sinking platform 112 is capable of limiting the connecting portion 22, and the first sinking platform 112 is capable of restricting the connecting portion 22 of the sealing nail from moving toward the inside of the top cover piece 1, thereby preventing the sealing nail from falling into a housing of the body of the battery. Further, at the time of liquid injection, a liquid injection port of the liquid injection device abuts against the first sinking platform 112, so that the liquid is conveyed into the liquid injection hole 111, thereby providing the pre-positioning of the liquid injection device.

The battery liquid injection structure further includes a fixing piece 3 mounted in the liquid injection portion 11. The fixing piece 3 is press-fitted to the sealing nail. In this way, the sealing nail is connected to the liquid injection portion 11, thereby preventing the sealing nail from falling off.

Preferably, the liquid injection section 11 is further provided with a second sinking platform 113 located on a side of the first sinking platform 112 away from the liquid injection hole 111. An inner diameter of the second sinking platform 113 is larger than the inner diameter of the first sinking platform 112. The fixing piece 3 is embedded in the second sinking platform 113. In this embodiment, the fixing piece 3 is an aluminum piece, and the fixing piece 3 is welded to the inner wall of the second sinking platform 113. The fixing piece 3 has an area larger than an area of the connecting portion 22 of the sealing nail. When the fixing piece 3 is welded to the second sinking platform 113, the inner diameter of the second sinking platform 113 is larger than the inner diameter of the first sinking platform 112, so that the sealing nail is kept at a certain interval from the side wall of the second sinking platform 113, thereby preventing the influence on the sealing nail during the welding. In addition, at the time of liquid injection, the liquid injection port of the liquid injection device abuts against the first sinking platform 112 to prevent the liquid from falling onto the second sinking platform 113, thereby ensuring that the welding quality of the fixing piece 3 and the second sinking platform 113 meets the requirements. The top cover piece 1 of this embodiment is also made of aluminum, so that the top cover piece 1 and the fixing piece 3 are welded with each other.

In this embodiment, a height of the first sinking platform 112 is 0.5 millimeter (mm), and a height of the second sinking platform 113 is 0.5 mm.

Preferably, an inner side of the top cover piece 1 is provided with a boss 12 through which the liquid injection hole 111 penetrates. The boss 12 increases the structural strength of the liquid injection hole 111 and the length of the liquid injection hole 111, thereby improving the sealing performance.

## Claims

1. A battery liquid injection structure comprising:
a top cover piece (1) provided with a liquid injection portion (11), wherein the liquid injection portion (11) is provided with a liquid injection hole (111) arranged obliquely; and
a sealing member (2) sealingly inserted in the liquid injection hole (111).

2. The battery liquid injection structure according to claim 1, wherein an axis of the liquid injection hole (111) is inclined with respect to an upper surface of the top cover piece (1).

3. The battery liquid injection structure according to claim 1, wherein the sealing member (2) comprises a sealing nail having a sealing portion (21), and the sealing portion (21) is sealingly inserted into the liquid injection hole (111).

4. The battery liquid injection structure according to claim 1, wherein an inclination angle of an axis of the liquid injection portion (11) with respect to an upper surface of the top cover piece (1) is denoted by A, and satisfies 75°≥A≥15°.

5. The battery liquid injection structure according to claim 1, wherein an end of the liquid injection hole (111) is provided with a first sinking platform (112), the first sinking platform (112) surrounds the liquid injection hole (111), and the sealing nail comprises a connecting portion (22) embedded in the first sinking platform (112).

6. The battery liquid injection structure according to claim 5, further comprising a fixing piece (3) mounted in the liquid injection portion (11), and the fixing piece (3) is press-fitted to the sealing nail.

7. The battery liquid injection structure according to claim 6, wherein the liquid injection portion (11) is further provided with a second sinking platform (113), the second sinking platform (113) is located on a side of the first sinking platform (112) away from the liquid injection hole (111), an inner diameter of the second sinking platform (113) is greater than an inner diameter of the first sinking platform (112), and the fixing piece (3) is embedded in the second sinking platform (113).

8. The battery liquid injection structure according to claim 7, wherein the fixing piece (3) is an aluminum piece, and the fixing piece (3) is welded to an inner wall of the second sinking platform (113).

9. The battery liquid injection structure according to any one of claims 1 to 8, wherein a shape of a cross section of the liquid injection hole (111) is circular, elliptical or polygonal, and a shape of the sealing portion (21) matches the shape of the liquid injection hole (111).

10. The battery liquid injection structure according to any one of claims 1 to 8, wherein an inner side of the top cover piece (1) is provided with a boss (12), and the liquid injection hole (111) extends through the boss (12).

11. A battery comprising a body and a battery liquid injection structure located at a top end of the body, wherein the battery liquid injection structure comprises:
a top cover piece (1) provided with a liquid injection portion (11), wherein the liquid injection portion (11) is provided with a liquid injection hole (111) arranged obliquely; and
a sealing member (2) sealingly inserted in the liquid injection hole (111).

12. The battery liquid injection structure according to claim 11, wherein an axis of the liquid injection hole (111) is inclined with respect to an upper surface of the top cover piece (1).

13. The battery liquid injection structure according to claim 11, wherein the sealing member (2) comprises a sealing nail having a sealing portion (21), and the sealing portion (21) is sealingly inserted into the liquid injection hole (111).

14. The battery liquid injection structure according to claim 11, wherein an inclination angle of an axis of the liquid injection portion (11) with respect to an upper surface of the top cover piece (1) is denoted by A, and satisfies 75°≥A≥15°.

15. The battery liquid injection structure according to claim 11, wherein an end of the liquid injection hole (111) is provided with a first sinking platform (112), the first sinking platform (112) surrounds the liquid injection hole (111), and the sealing nail comprises a connecting portion (22) embedded in the first sinking platform (112).

16. The battery liquid injection structure according to claim 15, further comprising a fixing piece (3) mounted in the liquid injection portion (11), and the fixing piece (3) is press-fitted to the sealing nail.

17. The battery liquid injection structure according to claim 16, wherein the liquid injection portion (11) is further provided with a second sinking platform (113), the second sinking platform (113) is located on a side of the first sinking platform (112) away from the liquid injection hole (111), an inner diameter of the second sinking platform (113) is greater than an inner diameter of the first sinking platform (112), and the fixing piece (3) is embedded in the second sinking platform (113).

18. The battery liquid injection structure according to claim 17, wherein the fixing piece (3) is an aluminum piece, and the fixing piece (3) is welded to an inner wall of the second sinking platform (113).

19. The battery liquid injection structure according to any one of claims 11 to 18, wherein a shape of a cross section of the liquid injection hole (111) is circular, elliptical or polygonal, and a shape of the sealing portion (21) matches the shape of the liquid injection hole (111).

20. The battery liquid injection structure according to any one of claims 11 to 18, wherein an inner side of the top cover piece (1) is provided with a boss (12), and the liquid injection hole (111) extends through the boss (12).

21. A battery pack comprising the battery according to any one of claims 11 to 20.
